# FASCICULE DE BREVET EUROPEEN

(11) **EP 1 809 520 B1**
(45) Date de publication et mention de la délivrance du brevet: **12.08.2009**
(21) Numéro de dépôt: 05819014.1
(22) Date de dépôt: 02.11.2005
(51) Int. Cl.: B60S 1/04, B60R 21/00

(54) **DISPOSITIF D'ESSUIE-GLACE POUR VEHICULE**
FRONTSCHEIBENWISCHERVORRICHTUNG FÜR EIN FAHRZEUG
WINDSCREEN WIPER DEVICE FOR VEHICLE

(30) Priorité: 04.11.2004 FR 0411757
(43) Date de publication de la demande: 25.07.2007
(73) Titulaire: RENAULT S.A.S., 92100 Boulogne Billancourt (FR)
(72) Inventeur: CANIS, Jean, F-78160 MARLY LE ROI (FR); GUYON, Michel, F-78340 LES CLAYES SOUS BOIS (FR); VERNEUIL, Pascal, F-78460 CHEVREUSE (FR)
(86) Numéro de dépôt international: PCT/FR2005/050921
(87) Numéro de publication internationale: WO 2006/048582

(56) Documents cités:
- EP-A- 0 739 792
- EP-A- 1 219 513
- WO-A-20/04108489
- FR-A- 2 837 767
- FR-A- 2 840 270
- FR-A- 2 846 288

## Description

La présente invention est relative à un dispositif d'essuie-glace pour véhicule automobile, plus particulièrement dans le cas où son mécanisme présente au moins un palier faisant saillie sur le capot moteur.

Pour respecter la réglementation actuelle concernant la sécurité des piétons pouvant subir un choc contre un véhicule, et stipulant que lors d'un impact, l'énergie dissipée ne doit pas dépasser une certaine valeur HIC - Head Impact Criteria -, il est impératif que la partie saillante d'un essuie-glace s'efface dans la boîte à eau située sous le capot moteur, dans le prolongement du pare-brise.

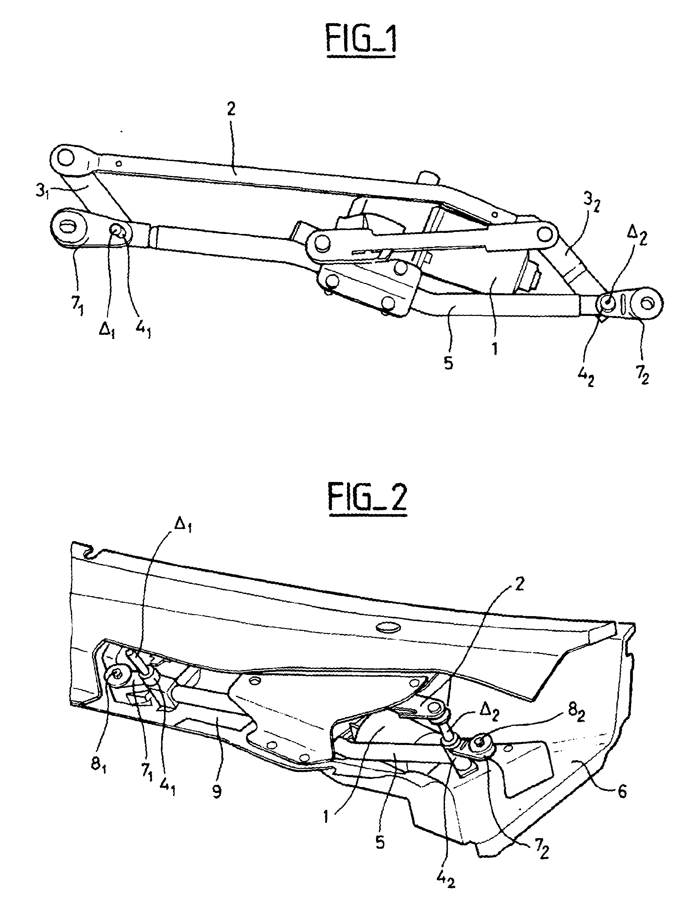

Comme le montre la figure 1, qui représente une timonerie d'essuie-glace actuelle, avec un palier qualifié de fusible, celle-ci est composée entre autres d'un moteur électrique 1 relié à une bielle 2, dont les deux extrémités articulées 3₁ et 3₂ sont attachées chacune à un palier 4₁ et 4₂ pour faire tourner leurs axes respectifs Δ₁ et Δ₂ solidaires d'un balai d'essuie-glace.

Ces deux paliers sont d'une part reliés entre eux par une barre 5 et d'autre part fixés à la carrosserie 6 du véhicule par l'intermédiaire d'une oreille 7₁ et 7₂ percée, dans laquelle est montée une vis 8₁ et 8₂, comme le montre la vue en perspective de la figure 2. Sur certains véhicules, cette timonerie est montée dans une boîte à eau 9, dans laquelle sont généralement logés le réservoir de lave-glace et la ventilation entre autres. Cette boîte à eau n'est pas profonde au point de pouvoir recueillir l'ensemble du mécanisme des essuie-glaces en cas de choc.

Un dispositif selon le préamble est connu du document EP 1219 513 A.

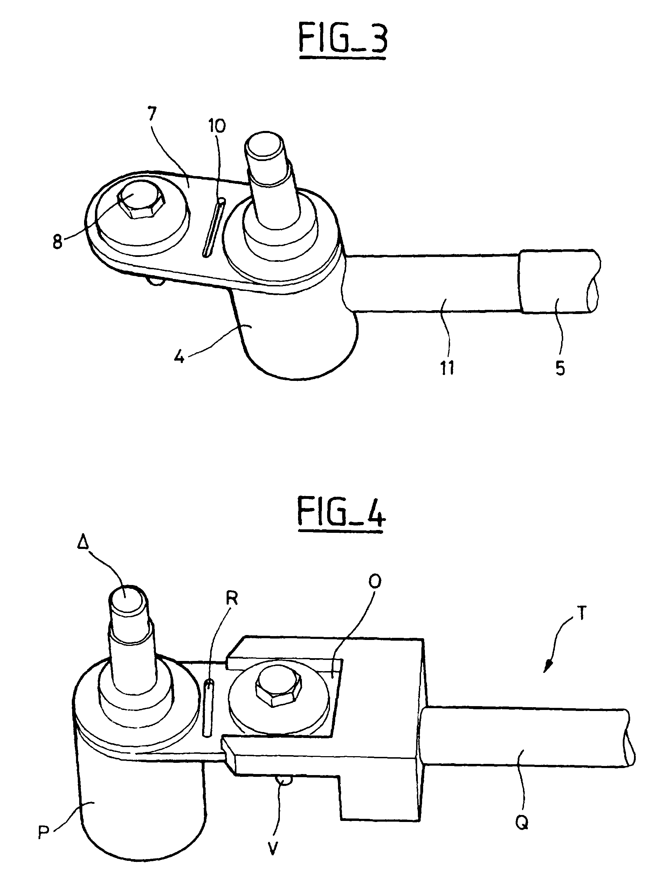

Une méthode actuelle pour tenter de répondre aux normes de sécurité exigées consiste à réaliser, comme le montre la figure 3, une amorce de rupture 10 de l'oreille de fixation 7 du palier 4. Cette amorce de rupture est localisée entre ledit palier et le point de fixation à la structure de la carrosserie matérialisé par une vis 8, ledit point de fixation étant prévu à l'extérieur de la timonerie, du côté opposé à la queue 11 du palier qui est solidarisée à la barre 5 destinée à rigidifier l'ensemble. Lors d'un impact violent, une rupture se produit au niveau de l'amorce, constituée d'un évidement de matière, et l'ensemble du mécanisme des essuie-glaces se désolidarise des points de fixation à la carrosserie. Si la boîte à eau qui recueille ce mécanisme n'est pas suffisamment profonde, les axes de sortie des paliers qui font tourner les balais d'essuie-glace risquent de demeurer saillants du capot moteur et d'occasionner des blessures graves au piéton choqué.

Le but de l'invention est de pallier cet inconvénient en désolidarisant le palier de chaque essuie-glace du reste de la timonerie et de la carrosserie du véhicule par une rupture unique au niveau de l'oreille d'assemblage.

Pour cela, l'objet de l'invention est un dispositif d'essuie-glace pour véhicule automobile comprenant une timonerie solidaire de la carrosserie et constituée notamment d'un moteur électrique destiné à assurer le déplacement d'au moins un essuie-glace sur le pare-brise, par l'intermédiaire d'une bielle articulée à au moins un palier sur l'axe de sortie duquel est monté l'essuie-glace, **caractérisé en ce que** l'oreille de fixation du palier à la timonerie d'une part et à la carrosserie d'autre part, présente une amorce de rupture de forme déterminée pour permettre, en cas de choc sur l'axe du palier, de désolidariser totalement ledit palier à la fois de la timonerie et de la carrosserie, et en mode de fonctionnement normal de résister aux efforts de déplacement du balai d'essuie-glace autour de l'axe du palier.

D'autres caractéristiques et avantages de l'invention apparaîtront à la lecture de la description d'exemples de réalisation non limitatifs, illustrée par les figures suivantes 4 et 5 qui sont des vues en perspective de deux variantes de localisation d'une rupture entre un palier d'essuie-glace et l'ensemble de la timonerie, les figures 1 à 3 ayant déjà été décrites.

Selon la première version représentée par la vue de la figure 4, le point de fixation de la timonerie T d'essuie-glaces à la carrosserie du véhicule est situé au niveau du balai d'essuie-glace, entre le palier P, autour de l'axe de sortie Δ duquel tourne le balai d'essuie-glace, et le reste du mécanisme, et l'amorce de rupture R est réalisée dans l'oreille O du palier entre ce dernier et le point de fixation. Ainsi, en cas de choc sur l'axe Δ du palier, une cassure se produit au niveau de l'amorce de rupture et le palier P peut s'enfoncer dans la boîte à eau du véhicule, car il est désolidarisé du reste de la timonerie qui reste fixée à la carrosserie par des moyens de fixation, des vis V par exemple.

L'oreille O, permettant de relier la timonerie T avec le moteur et la bielle au palier de l'essuie-glace, est réalisée dans un matériau rigide pour que, lors du fonctionnement normal des essuie-glaces, le moteur commande bien le déplacement de la lame de caoutchouc destinée à essuyer le pare-brise, et l'amorce de rupture R est de forme déterminée pour permettre une cassure dans l'oreille en cas de choc violent sur l'axe Δ du palier, sans fragiliser la résistance de l'oreille aux efforts de fonctionnement normal. De plus, la forme de l'oreille O est déterminée pour recevoir le moyen de fixation de la timonerie T à la carrosserie, soit une vis V par exemple, entre l'amorce R de rupture et la queue du palier Q qui est sertie à la barre de la timonerie reliant les deux paliers.

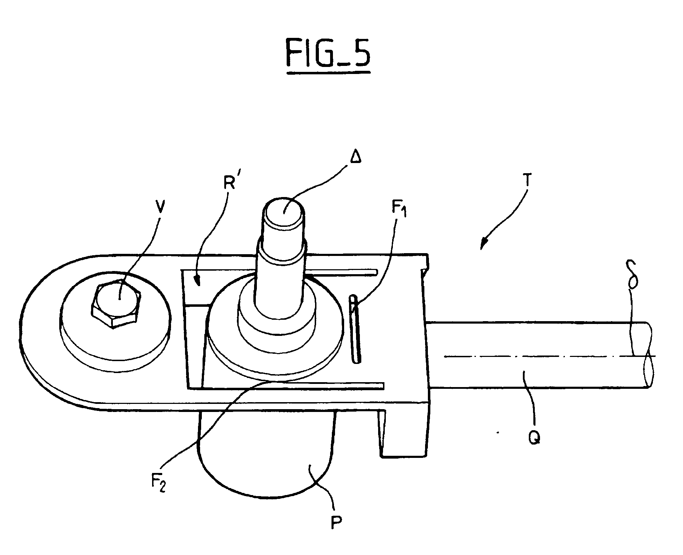

Selon une seconde version, représentée par la vue en perspective de la figure 5, le point de fixation de la timonerie à la carrosserie est extérieur à l'ensemble du mécanisme des essuie-glaces, soit du côté opposé à la queue du palier Q, mais l'oreille O assurant la liaison entre ce point de fixation et le palier P présente une amorce de rupture R' qui entoure quasiment tout le palier, à l'exception d'une partie destinée à assurer la liaison entre le palier et sa queue sertie au reste de la timonerie. L'amorce de rupture R', pratiquée dans l'oreille O du palier P, est constituée par exemple, d'une première fente F₁ perpendiculaire à l'axe de symétrie δ de la queue du palier et d'une seconde fente F₂ en forme de U entourant le reste du pourtour du palier. La forme et l'importance de l'amorce de rupture est calculée de façon à assurer d'une part une liaison rigide entre la timonerie, le palier de balai d'essuie-glace et la carrosserie en phase de fonctionnement normal du dispositif, et d'autre part une cassure en cas de choc sur l'axe Δ du palier.

Dans les deux versions, l'axe de rotation Δ du palier, qui est saillant du capot moteur pendant la vie du véhicule, peut descendre dans la boîte à eau sous le capot, indépendamment du reste de la timonerie du dispositif, en cas de choc piéton pour éviter d'éventuelles blessures graves, en particulier au niveau de la tête du piéton touché.

## Revendications

1. Dispositif d'essuie-glace pour véhicule automobile comprenant une timonerie solidaire de la carrosserie et constituée notamment d'un moteur électrique destiné à assurer le déplacement d'au moins un essuie-glace sur le pare-brise, par l'intermédiaire d'une bielle articulée à au moins un palier sur l'axe de sortie duquel est monté l'essuie-glace, **caractérisé en ce que** le palier (P) est fixé à la timonerie d'une part et à la carrosserie d'autre part par une oreille de fixation (O), qui présente une forme déterminée pour recevoir un moyen de fixation (V) de la timonerie (T) à la carrosserie et qui présente une amorce de rupture (R) de forme déterminée pour permettre, en cas de choc sur l'axe (Δ) de sortie du palier, de désolidariser totalement ledit palier à la fois de la timonerie et de la carrosserie, et en mode de fonctionnement normal de résister aux efforts de déplacement du balai d'essuie-glace autour de l'axe (Δ) du palier.

2. Dispositif d'essuie-glace selon la revendication 1, **caractérisé en ce que** le point de fixation du palier et de la timonerie à la carrosserie est situé entre ledit palier (P) et la timonerie, et l'amorce de rupture (R) est pratiquée dans l'oreille (O) du palier entre ce dernier et le moyen de fixation (V) à la carrosserie.

3. Dispositif d'essuie-glace selon la revendication 2, **caractérisé en ce que** l'amorce de rupture (R) est une fente perpendiculaire à l'axe de symétrie (δ) de la queue du palier solidaire de la timonerie.

4. Dispositif d'essuie-glace selon la revendication 1, **caractérisé en ce que** le point de fixation du palier et de la timonerie à la carrosserie est situé à l'extérieur de l'ensemble des éléments constituant la timonerie, du côté du palier (P) opposé à sa queue solidaire de la timonerie et **en ce que** l'amorce de rupture (R') est pratiquée sur le pourtour de l'oreille (O) du palier selon une forme prédéterminée, destinée à assurer une liaison rigide entre le palier et sa queue en mode de fonctionnement normal.

5. Dispositif d'essuie glace selon la revendication 4, **caractérisé en ce que** l'amorce de rupture (R'), pratiquée dans l'oreille (O) du palier (P), est constituée d'une première fente (F₁) perpendiculaire à l'axe de symétrie (δ) de la queue du palier et d'une seconde fente (F₂) en forme de U entourant le reste du pourtour du palier.

## Claims

1. Windshield wiper device for a motor vehicle comprising control gear fixedly attached to the bodywork and consisting in particular of an electric motor intended to move at least one windshield wiper on the windshield, by means of a connecting rod articulated on at least one bearing on the output shaft of which the windshield wiper is mounted, **characterized in that** the bearing (P) is attached to the control gear on the one hand and to the bodywork on the other hand by an attachment lug (O) that has a shape determined to receive a means (V) for attaching the control gear (T) to the bodywork and that has an incipient break (R) of a shape determined to make it possible, in the case of an impact on the output shaft (Δ) of the bearing, to totally separate said bearing both from the control gear and the bodywork, and in normal operating mode to withstand the forces for moving the windshield wiper blade about the shaft (Δ) of the bearing.

2. Windshield wiper device according to claim 1, **characterized in that** the point of attachment of the bearing and of the control gear to the bodywork is situated between said bearing (P) and the control gear, and the incipient break (R) is made in the lug (O) of the bearing between the latter and the means (V) of attachment to the bodywork.

3. Windshield wiper device according to claim 2, **characterized in that** the incipient break (R) is a slot perpendicular to the axis of symmetry (δ) of the shank of the bearing fixedly attached to the control gear.

4. Windshield wiper device according to claim 1, **characterized in that** the point of attachment of the bearing and of the control gear to the bodywork is situated outside the assembly of the elements forming the control gear, on the side of the bearing (P) opposite to its shank fixedly attached to the control gear and **in that** the incipient break (R') is made on the periphery of the lug (O) of the bearing according to a predetermined shape, designed to provide a rigid connection between the bearing and its shank in normal operating mode.

5. Windshield wiper device according to claim 4, **characterized in that** the incipient break (R'), made in the lug (O) of the bearing (P), consists of a first slot (F₁) perpendicular to the axis of symmetry (δ) of the shank of the bearing and of a second U-shaped slot (F₂) surrounding the rest of the periphery of the bearing.

## Patentansprüche

1. Kraftfahrzeugscheibenwischervorrichtung mit einem Gestänge, das mit der Karosserie fest verbunden ist und besonders aus einem Elektromotor besteht, der dazu bestimmt ist, über einen Lenker, der an mindestens einem Lager an der Ausgangsachse, an der der Scheibenwischer montiert ist, angelenkt ist, für das Verschieben von mindestens einem Scheibenwischer auf der Windschutzscheibe zu sorgen, **dadurch gekennzeichnet, dass** das Lager (P) über eine Befestigungsöse (O) einerseits am Gestänge und andererseits an der Karosserie befestigt ist, wobei die Befestigungsöse eine bestimmte Form zur Aufnahme eines Mittels (V) zur Befestigung des Gestänges (T) an der Karosserie hat und eine Sollbruchstelle (R) mit bestimmter Form hat, damit sich das Lager im Falle eines Aufpralls auf die Ausgangsachse (Δ) des Lagers sowohl vom Gestänge als auch von der Karosserie völlig lösen und im normalen Funktionsmodus den Verschiebungskräften des Scheibenwischerblatts um die Achse (Δ) des Lagers widerstehen kann.

2. Scheibenwischervorrichtung nach Anspruch 1, **dadurch gekennzeichnet, dass** sich die Stelle, an der das Lager und das Gestänge an der Karosserie befestigt sind, zwischen dem Lager (P) und dem Gestänge befindet und die Sollbruchstelle (R) in der Öse (O) des Lagers zwischen Letzterer und dem Mittel (V) zur Befestigung an der Karosserie ausgeführt ist.

3. Scheibenwischervorrichtung nach Anspruch 2, **dadurch gekennzeichnet, dass** es sich bei der Sollbruchstelle (R) um einen zur Symmetrieachse (δ) des mit dem Gestänge fest verbundenen Lagerschafts senkrecht verlaufenden Schlitz handelt.

4. Scheibenwischervorrichtung nach Anspruch 1, **dadurch gekennzeichnet, dass** sich die Stelle, an der das Lager und das Gestänge an der Karosserie befestigt sind, außerhalb der das Gestänge bildenden Elementgruppe an der Seite des Lagers (P), die seinem mit dem Gestänge fest verbundenen Schaft gegenüberliegt, befindet und dass die Sollbruchstelle (R) am Umfang der Öse (O) des Lagers mit einer vorbestimmten Form ausgeführt ist, die für eine starre Verbindung zwischen dem Lager und seinem Schaft im normalen Funktionsmodus sorgen soll.

5. Scheibenwischervorrichtung nach Anspruch 4, **dadurch gekennzeichnet, dass** die in der Öse (O) des Lagers (P) ausgeführte Sollbruchstelle (R') aus einem ersten Schlitz (F₁), der zur Symmetrieachse (δ) des Lagerschafts senkrecht verläuft, und einem zweiten U-förmigen Schlitz (F₂), der den restlichen Umfang des Lagers umgibt, besteht.
